# FASCICULE DE BREVET EUROPEEN

(11) **EP 3 053 090 B1**
(45) Date de publication et mention de la délivrance du brevet: **19.12.2018**
(21) Numéro de dépôt: 14793878.1
(22) Date de dépôt: 25.09.2014
(51) Int. Cl.: G06F 21/79, G06F 21/85

(54) **PROCEDE DE PROTECTION D'UN CONNECTEUR USB**
VERFAHREN ZUM SCHUTZ EINES USB-ANSCHLUSSES
METHOD FOR PROTECTION OF A USB CONNECTOR

(30) Priorité: 02.10.2013 FR 1359568
(43) Date de publication de la demande: 10.08.2016
(73) Titulaire: Time Reversal Communications, 95861 Cergy-Pontoise Cedex (FR)
(72) Inventeur: BONDOUX, Catherine, F-78600 Mainsons-Lafitte (FR); LE BARTZ, Jean-Luc, F-78700 Conflans Sainte Honorine (FR)
(74) Mandataire: Cabinet Camus Lebkiri
(86) Numéro de dépôt international: PCT/FR2014/052415
(87) Numéro de publication internationale: WO 2015/049439

(56) Documents cités:
- US-A1- 2006 036 872

## Description

### DOMAINE TECHNIQUE DE L'INVENTION

L'invention se rapporte à la sécurisation des dispositifs dotés d'au moins un connecteur USB.

### ETAT DE LA TECHNIQUE ANTERIEURE

Dans l'état de la technique on connaît les connecteurs USB, aussi appelés ports USB, qui permettent de connecter un dispositif à un autre. Par exemple de connecter un téléphone mobile, ou une tablette, à un ordinateur ou à un chargeur.

Ces ports fonctionnent selon une norme, appelée norme USB, qui comporte plusieurs versions. Cette norme décrit comment des périphériques doivent se connecter et prévoit notamment une étape de négociation entre les appareils connectés pour qu'ils s'identifient mutuellement et puissent coopérer efficacement. On parle d'une étape de négociation USB. Cette étape de négociation comporte notamment, une stimulation électrique via les broches D+ et D-, suivie d'une énumération des capacités du dispositif. On rappel ici qu'un connecteur USB comporte 4 broches :
- Alimentation
- Données D-
- Données D+
- Masse.

Dans le domaine des appareils sécurisés, les connecteurs USB sont l'une des premières choses attaquées. Dans l'état de la technique, embarquer un connecteur USB sur un appareil sécurisé est considéré comme un faille de sécurité, notamment à cause d'éventuelles erreurs, aussi appelé bug, qui subsisterait dans le code implémentant la norme. Ces bugs permettent alors des attaques, par exemple par débordement de buffer ou par falsification de paquet.

Dans l'état de la technique un dispositif sécurisé ne doit donc pas être équipé d'un connecteur USB.

Cela impose, entre autre, d'avoir un connecteur de puissance dédié pour pouvoir recharger la batterie d'un appareil sécurisé mobile. Cela réduit considérablement son confort d'utilisation.

Le document US 2006/0036872 intitulé « Anti-burglary USB flash drive with press-button type electronic combination lock » est connu de l'état de la technique.

### EXPOSE DE L'INVENTION

L'invention propose un procédé, un dispositif de stockage numérique et un dispositif tels que définis dans le revendications.

L'invention vise à remédier à tout ou partie des inconvénients de l'état de la technique identifiés ci-dessus, et notamment à proposer des moyens pour permettre d'équiper un téléphone mobile d'un connecteur USB.

En particulier l'invention permet de prévenir toute exécution de code de gestion d'un connecteur USB tant que le téléphone n'est pas garanti comme fonctionnant dans un mode sécurisé.

Dans ce dessein, un aspect de l'invention se rapporte à procédé de connexion sécurisée d'un premier dispositif à un deuxième dispositif via une connexion USB, chaque dispositif comportant un connecteur USB caractérisé en ce que le procédé comporte les étapes suivantes, mise en oeuvre par le premier dispositif :
- Détection de la connexion du deuxième dispositif,
- Verrouillage du premier dispositif,
- Inhibition de l'étape de négociation USB avant la stimulation électrique selon la norme USB.

Outre les caractéristiques principales qui viennent d'être mentionnées dans le paragraphe précédent, le procédé/dispositif selon l'invention peut présenter une ou plusieurs caractéristiques complémentaires parmi les suivantes, considérées individuellement ou selon les combinaisons techniquement possibles:
- Le procédé comporte également les étapes suivantes :
   - Déverrouillage du premier dispositif,
   - Déclenchement de l'étape de négociation USB.
- le premier dispositif est déverrouillé par la saisie d'un identifiant secret l'utilisateur du premier dispositif.
- l'identifiant secret est un code alphanumérique.
- l'identifiant secret est un signe biométrique.
- le procédé comporte également l'étape suivante :
   - réglage du niveau de chargement d'une batterie du premier dispositif à un niveau prédéterminée.
- le niveau de charge prédéterminée est entre 400mA et 500mA.
- le niveau de charge prédéterminée est entre 500mA et 600mA.

L'invention se rapporte également à un dispositif de stockage numérique comportant un fichier correspondant à des codes instructions mettant en oeuvre le procédé selon l'une des revendications précédentes.

L'invention se rapporte également à un dispositif mettant en oeuvre le procédé selon l'une des revendications précédentes.

### BREVE DESCRIPTION DES FIGURES

D'autres caractéristiques et avantages de l'invention ressortiront à la lecture de la description qui suit, en référence aux figures annexées, qui illustrent :
- figure 1, une illustration de moyens permettant la mise en oeuvre de l'invention ;
- figure 2, une illustration d'étapes du procédé selon l'invention.

Pour plus de clarté, les éléments identiques ou similaires sont repérés par des signes de référence identiques sur l'ensemble des figures.

L'invention sera mieux comprise à la lecture de la description qui suit et à l'examen des figures qui l'accompagnent. Celles-ci sont présentées à titre indicatif et nullement limitatif de l'invention.

### DESCRIPTION DETAILLEE D'UN MODE DE REALISATION

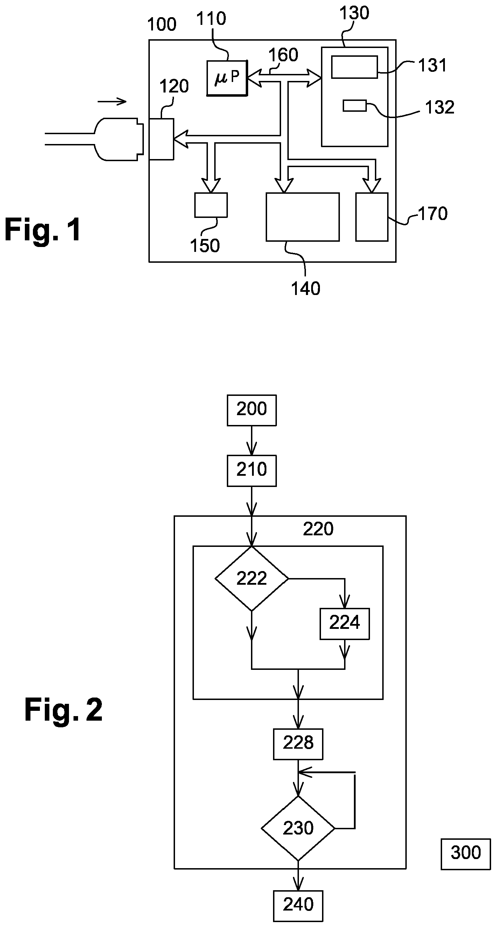

A la figure 1 montre premier dispositif 100, dans l'exemple un téléphone 100, comportant au moins :
- Un microprocesseur 110,
- Un connecteur 120 usb,
- Des moyens 130 de stockage, par exemple une mémoire flash,
- Un écran 140,
- Un périphérique 150 d'entrées, par exemple un clavier, un capteur biométrique d'empreintes digitales. On notera ici, que dans le cas d'un téléphone tactile, l'écran est apte à jouer le rôle de périphérique d'entrées en mode clavier ou autre,
- Une batterie 170.

Les éléments du téléphone 100 sont interconnectés par un bus 160. Les éléments du téléphone 100 interconnectés par le bus 160 sont :
- Le microprocesseur 110,
- le connecteur 120 USB,
- les moyens 130 de stockage,
- le périphérique 150 d'entrées,
- la batterie 170.

Pour la description du procédé on attribue des étapes ou des actions à un dispositif, par exemple le téléphone 100. Un tel dispositif comporte au moins un microprocesseur et une mémoire de stockage. La mémoire de stockage permet d'enregistrer des codes instructions dont l'interprétation permet la mise en oeuvre des étapes ou des actions décrites. Donc, lorsque l'on attribue une action à un dispositif, celle-ci est en fait réalisée par un microprocesseur du dispositif interprétant des codes instructions enregistrés dans une mémoire de la machine.

Lorsque l'on dit qu'une action est effectuée par un système d'exploitation, une application, un processus, ou une zone de code instructions, cette action correspond à la mise en oeuvre, par un microprocesseur, de codes instructions correspondant, comme décrit au paragraphe précédent.

Dans le cas de la présente description on envisage les moyens de stockage comme une mémoire flash unique dans un souci de simplification et de clarté. Dans la pratique chaque zone décrite pourrait être stockée sur un composant différent, y compris des composants RAM, et ces composants pourraient être, tous ou partie, des coffres forts numériques.

La figure 1 montre que les moyens 130 de stockage comporte :
- Une zone 131 pilote USB correspondant à des codes instructions exécuté pour la gestion du connecteur 120 USB. La zone 131 comporte les codes instructions correspondant à l'invention ;
- Une zone 132 statut du téléphone utilisée pour enregistrer un statut du téléphone. Les statuts intéressant pour l'invention sont « verrouillée » et « non verrouillé ».

La figure 2 montre une étape 200 initiale dans laquelle un deuxième dispositif, non représenté, est connecté au premier dispositif 100 via le connecteur 120 USB. Dans la pratique le deuxième dispositif est, par exemple, un ordinateur ou un chargeur.

Dans une étape 210, suivant l'étape 200, le premier dispositif détecte la connexion du deuxième dispositif. Dans la pratique une connexion est détectée par la mesure d'une puissance électrique au niveau des broches d'alimentation du connecteur 120 USB, c'est-à-dire par l'apparition d'une tension en les broches d'alimentation et de masse. Dans un tel cas de figure le téléphone exécute le pilote USB.

Dans l'invention le pilote USB est exécuté dans une étape 220 de prise en charge de la connexion USB. L'étape 200 de prise en charge comporte une étape 222 de vérification du statut du premier dispositif :
- Si le statut est déverrouillé alors le premier dispositif passe à une étape 224 de verrouillage du premier dispositif.
- Si le statut est verrouillé alors le premier dispositif passe à une étape 228 optionnelle de réglage du niveau de charge de batterie 170.

De l'étape 224 de verrouillage on passe à l'étape 228 optionnelle de réglage du niveau de charge. L'étape 228 de réglage de charge est classique est décrite par la norme USB. L'apport de l'invention est ici que le niveau de charge est réglé à un niveau prédéterminé sans qu'aucune communication n'ait été établie entre les premier et deuxième dispositifs. Le niveau de charge est choisi pour être compatible avec le moins puissant des deuxièmes dispositifs envisagés.

On envisage ainsi des niveaux de charge compris entre 400mA et 500mA, ou entre 500mA et 600mA. Cela permet de charger dans tous les cas le premier dispositif, sans déverrouillage du premier dispositif et sans écroulement d'une batterie du deuxième dispositif.

Dans la pratique ces valeurs correspondent à des puissances qui peuvent être délivrées par des deuxièmes dispositifs. Si on envisage des cas d'utilisations dans lesquels cette puissance qui peut être délivrée est supérieure ou inférieure aux valeurs citées, alors l'enseignement de l'invention reste valable. Il suffit d'ajuster le niveau prédéterminé aux conditions d'utilisation envisagées.

Le fait que l'étape 228 de réglage du niveau de charge soit optionnelle signifie qu'il existe une variante de l'invention dans laquelle elle n'est pas mise en oeuvre. Dans un tel cas les étapes ayant été décrites comme aboutissant à l'étape 228 de réglage du niveau de charge aboutissent alors à l'étape 230 d'inhibition de l'étape de négociation USB.

L'étape 224 de verrouillage est classique en ce sens qu'à la sortie de l'étape de verrouillage le premier dispositif réagit à toute sollicitation par une demande de déverrouillage et ce jusqu'à un déverrouillage réussi. L'étape de verrouillage passe le statut du premier dispositif à « verrouillé ». L'étape de verrouillage peut être exécutée dans un autre contexte que celui de la gestion d'une connexion USB, par exemple sur une demande expresse de verrouillage par un utilisateur. Elle a, quel que soit le contexte, les mêmes effets que ceux précédemment décrits.

De l'étape 228 de réglage du niveau de charge on passe à une étape 230 d'inhibition de l'étape de négociation USB.

L'étape 230 est, par exemple, une boucle tant que qui teste le statut du premier dispositif. On ne sort de la boucle que si le statut du premier dispositif est « déverrouillé ». Le seul moyen de sortir de la boucle étant alors soit de déverrouiller le premier dispositif, soit de déconnecter le deuxième dispositif.

Ainsi le code de gestion du connecteur USB n'est exécuté que si le premier dispositif est passé d'un statut « verrouillé » à un statut « déverrouillé » après la connexion du deuxième dispositif. Si un déverrouillage intervient durant l'étape 230 alors le premier dispositif passe à une étape 240 de gestion classique d'une connexion USB. Ici l'utilisation d'un statut du premier dispositif est équivalent à la gestion d'un état du connecteur 120 USB. Dans le cas de l'état du connecteur on procéderait comme suit :
- A l'étape 224 l'état du connecteur est passé à « en attente »
- Dans la boucle tant que on teste l'état du connecteur et on ne sort que s'il vaut « actif »
- Dans l'étape 300 de déverrouillage on passe l'état du connecteur à « actif ».

Dans la pratique, si on envisage la connexion d'un dispositif selon l'invention à un ordinateur, l'ordinateur ne détectera la connexion qu'une fois que le dispositif selon l'invention aura été déverrouillé.

On aura compris que l'on est dans un contexte multitâches et que donc la boucle « tant que » utilisée à titre d'exemple n'est pas bloquante du point de vue du premier dispositif. Cela revient à mettre un processus, ici la gestion d'une connexion USB, en attente tant qu'une condition n'est pas remplie.

La précision, avant la stimulation électrique, signifie que le code de gestion de la connexion USB est inhibé avant qu'il ait pu exécuter une action qui signalerait la connexion au deuxième dispositif.

Avec l'invention on peut donc dire que la gestion des connexions USB est hors la norme. Cependant, cela réduit d'autant la surface d'exposition à des attaques d'un dispositif mettant en oeuvre le procédé selon l'invention.

La figure 2 montre une étape 300 de déverrouillage qui intervient pendant l'inhibition 230 de l'étape de négociation USB. Ce déverrouillage permet premier dispositif de passer à l'étape 240 de gestion classique d'une connexion USB, c'est-à-dire de se signaler au deuxième dispositif et de procédé à l'énumération des capacités USB du premier dispositif. Une capacité est, par exemple, la faculté de prendre en charge le protocole MTP sur la connexion USB.

Dans la mesure où le premier dispositif doit être sécurisé l'étape 300 de déverrouillage est :
- Une saisie d'une séquence de codes alphanumériques valide, cette saisie se fait, par exemple, via l'écran qui alors un écrans tactile,
- Une saisie d'une empreinte digitale reconnue, cette saisie se fait alors via le périphérique 150 d'entrées.

L'exécution de l'étape de déverrouillage passe le statut du premier dispositif à « déverrouillé ».

Avec l'invention il est impossible de réaliser une connexion USB sans qu'un utilisateur ait effectué un déverrouillage du premier dispositif. Cela rend les attaques via le port USB impossible sans le consentement de l'utilisateur.

## Revendications

1. Procédé de connexion sécurisée d'un premier dispositif de type téléphone à un deuxième dispositif via une connexion USB, chaque dispositif comportant un connecteur USB **caractérisé en ce que** le procédé comporte les étapes suivantes, mise en oeuvre par le premier dispositif dans cet ordre :
- Détection (200) de la connexion du deuxième dispositif via le connecteur USB par la mesure d'une puissance électrique,
- Verrouillage (224) du premier dispositif,
- Inhibition (230) de l'étape de négociation USB avant la stimulation électrique selon la norme USB :
∘ Si le premier dispositif est déverrouillé par un utilisateur (300) :
• Déclenchement (240) de l'étape de négociation USB.

2. Procédé de connexion sécurisée selon la revendication 1, **caractérisé en ce que** le premier dispositif est déverrouillé par la saisie d'un identifiant secret l'utilisateur du premier dispositif.

3. Procédé de connexion sécurisée selon la revendication 2, **caractérisé en ce que** l'identifiant secret est un code alphanumérique.

4. Procédé de connexion sécurisée selon la revendication 2, **caractérisé en ce que** l'identifiant secret est un signe biométrique.

5. Procédé selon l'une des revendications précédente, **caractérisé en ce qu'**il comporte l'étape suivante :
- Réglage (228) du niveau de chargement d'une batterie du premier dispositif à un niveau prédéterminée.

6. Procédé selon la revendication 5 **caractérisé en ce que** le niveau de charge prédéterminée est entre 400mA et 500mA.

7. Procédé selon la revendication 5 **caractérisé en ce que** le niveau de charge prédéterminée est entre 500mA et 600mA.

8. Dispositif (130) de stockage numérique comportant un fichier correspondant à des codes instructions mettant en oeuvre le procédé selon l'une des revendications précédentes.

9. Dispositif (100) mettant en oeuvre le procédé selon l'une des revendications précédentes.

## Patentansprüche

1. Gesichertes Anschlussverfahren einer ersten Vorrichtung vom Typ Telefon an eine zweite Vorrichtung über einen USB-Anschluss, wobei jede Vorrichtung einen USB-Anschluss umfasst, **dadurch gekennzeichnet, dass** das Verfahren die folgenden Schritte umfasst, die von der ersten Vorrichtung in dieser Reihenfolge umgesetzt werden:
- Detektion (200) des Anschlusses der zweiten Vorrichtung über den USB-Slot durch die Messung einer elektrischen Leistung;
- Verriegelung (224) der ersten Vorrichtung,
- Hemmung (230) des USB-Übertragungsschritts vor der elektrischen Stimulation gemäß der USB-Norm:
∘ Wenn die erste Vorrichtung von einem Nutzer (300) entriegelt ist;
• Auslösen (240) des USB-Übertragungsschritts

2. Gesichertes Anschlussverfahren gemäß Anspruch 1, **dadurch gekennzeichnet, dass** die erste Vorrichtung durch die Eingabe einer geheimen Kennung des Nutzers der ersten Vorrichtung entriegelt ist.

3. Gesichertes Anschlussverfahren gemäß Anspruch 2, **dadurch gekennzeichnet, dass** die geheime Kennung ein alphanumerischer Code ist.

4. Gesichertes Anschlussverfahren gemäß Anspruch 2, **dadurch gekennzeichnet, dass** die geheime Kennung ein biometrisches Zeichen ist.

5. Verfahren gemäß einem der voranstehenden Ansprüche, **dadurch gekennzeichnet, dass** es den folgenden Schritt umfasst:
- Einstellung (228) des Ladungsniveaus einer Batterie der ersten Vorrichtung auf ein vorbestimmtes Niveau.

6. Verfahren gemäß Anspruch 5, **dadurch gekennzeichnet, dass** das vorbestimmte Ladungsniveau zwischen 400 mA und 500 mA beträgt.

7. Verfahren gemäß Anspruch 5, **dadurch gekennzeichnet, dass** das vorbestimmte Ladungsniveau zwischen 500 mA und 600 mA beträgt.

8. Digitale Speichervorrichtung (130), umfassend eine Anweisungscodes entsprechende Datei, die das Verfahren gemäß einem der voranstehenden Ansprüche umsetzen.

9. Das Verfahren gemäß einem der voranstehenden Ansprüche umsetzende Vorrichtung (100).

## Claims

1. Method for the secured connection of a first device of the telephone type to a second device via a USB connection, each device comprising a USB connector **characterised in that** the method comprises the following steps, implemented by the first device in this order:
- Detection (200) of the connection of the second device via the USB connector by measuring an electrical power,
- Locking (224) of the first device,
- Inhibition (230) of the step of USB negotiation before the electrical stimulation according to the USB standard:
∘ If the first device is unlocked by a user (300):
• Triggering (240) of the step of USB negotiation.

2. Method for a secured connection according to claim 1, **characterised in that** the first device is unlocked by the entering of a secret identifier of the user of the first device.

3. Method for a secured connection according to claim 2, **characterised in that** the secret identifier is an alphanumeric code.

4. Method for a secured connection according to claim 2, **characterised in that** the secret identifier is a biometric sign.

5. Method according to one of the preceding claims, **characterised in that** it comprises the following step:
- Setting (228) the charge level of a battery of the first device to a predetermined level.

6. Method according to claim 5 **characterised in that** the predetermined charge level is between 400mA and 500mA.

7. Method according to claim 5 **characterised in that** the predetermined charge level is between 500mA and 600mA.

8. Device (130) for digital storage comprising a file corresponding to instruction codes that implement the method according to one of the preceding claims.

9. Device (100) implementing the method according to one of the preceding claims.
